# EUROPEAN PATENT SPECIFICATION

(11) **EP 2 633 710 B1**
(45) Date of publication and mention of the grant of the patent: **30.05.2018**
(21) Application number: 11769938.9
(22) Date of filing: 18.09.2011
(51) Int. Cl.: H04W 76/50, H04W 4/06, H04W 4/90

(54) **EMERGENCY NOTIFICATION SYSTEM AND METHOD UTILIZING PREEMPTION OF ACTIVE MEDIA SESSIONS**
NOTBENACHRICHTIGUNGSSYSTEM UND VERFAHREN ZUR VERWENDUNG VON BEVORRECHTIGUNG AKTIVER MEDIASITZUNGEN
SYSTÈME ET PROCÉDÉ DE NOTIFICATION D'URGENCE FAISANT JOUER LA PRÉEMPTION SUR DES SESSIONS MULTIMÉDIAS ACTIVES

(30) Priority: 26.10.2010 US 912402
(43) Date of publication of application: 04.09.2013
(73) Proprietor: Telefonaktiebolaget LM Ericsson (publ), 164 83 Stockholm (SE)
(72) Inventor: LONG, Emmett, Dallas, TX 75214 (US); COYNE, Michael, Dallas Texas 75248 (US); ISRAEL, Solomon, Dallas Texas 75230 (US); VINEKAR, Rahul, Plano Texas 75025 (US)
(74) Representative: Brann AB
(86) International application number: PCT/IB2011/054077
(87) International publication number: WO 2012/056336

(56) References cited:
- US-A1- 2004 136 408
- US-A1- 2007 136 743
- US-A1- 2007 143 491
- US-A1- 2009 248 828

## Description

### BACKGROUND

The present invention relates to communication systems. More particularly, and not by way of limitation, the present invention is directed to an emergency notification system and method utilizing preemption of currently active media sessions.

In US 2007/0136743 A1 there are described an apparatus and methods for efficiently and flexibly providing emergency alert data to subscribers of a content-based network, such as for example Internet protocol television subscribers. The apparatus includes a server performing real-time receipt and encapsulation of emergency alert system EAS data, transport of the EAS data to client devices over the network, and use of one or more applications running on the client devices to decode and display/present the EAS data in a manner which efficiently guarantees that it will be perceived by the viewer. An instant messaging IM infrastructure is used to authenticate clients and receive and display at least portion of the EAS data via a separate transport process.

Many types of emergency situations, such as natural and man-made public disasters and catastrophes may expose the general public within a particular geographic area to the risk of harm. Such emergency situations can impact large geographic areas and/or densely populated areas such that a great many individuals are placed at risk of being adversely affected by the emergency situation. Providing members of the public who are at risk with a timely warning of an emergency situation is important for saving lives and property.

Existing solutions for emergency notification systems have focused on different ways to disseminate emergency information to the general public. For example, some utilize radio and television broadcasts, cellular telephone Point-To-Multi-Point (P2MP) broadcasts, or cellular broadcasts to specially programmed personal warning devices. Other solutions work in reverse and enable members of the public to transmit notifications of emergency events to a central server for transmittal to the appropriate governmental agencies.

In addition, several standards bodies and regulatory commissions are actively working on methods to enhance the capabilities of emergency service personnel. These bodies and commissions include but are not limited to:
- Cellular Emergency Advisory Systems Association (CEASA) ;
- Internet Engineering Task Force (IETF) Geographic location/Privacy (GEOPRIV) and Emergency Context Resolution with Internet Technologies (ECRIT);
- Digital Subscriber Line (DSL) Forum;
- Institute of Electrical and Electronic Engineers (IEEE): 802.1, 1A; Link Layer Discovery Protocol-Media Endpoint Discovery (LLDP MED),. 802.11k, 802.11u);
- Third Generation Partnership Project (3GPP) and 3GPP2;
- European Telecommunications Standards Institute (ETS1) Emergency Telecommunications (EMTEL) and Telecommunications and Internet converged services and Protocols for Advanced Networking (TISPAN);
- PacketCable
- International Telecommunications Union-Telecommunications (ITU-T) Study Group (SG) 13, SG 11, and SG 2;
- Alliance for Telecommunications Industry Solutions Emergency Services Interconnection Forum (ATIS-ESIF);
- WiMax Forum;
- Open Mobile Alliance (OMA);
- Organization for the Advancement of Structured Information Standards (OASIS) Emergency Management Technical Committee (EM-TC) Group;
- American National Standards Institute (ANSI) Homeland Security Standards Panel; and
- Federal Communications Commission (FCC).

Existing emergency notification systems have numerous disadvantages, especially in the context of public use where many individuals must be warned of an emergency situation. Radio and television broadcasting systems cannot be entirely relied on to provide members of the public with emergency warnings because such systems may be rendered inoperable as a result of the emergency situation and/or because individuals may not be listening to a radio or watching a television at the very time that the emergency warning is broadcast. Accordingly, emergency warnings broadcast via radio and/or television may not reach a large segment of the population for whom the emergency warnings are intended or may not reach individuals until it is too late for them to take protective action.

Emergency notification systems utilizing cellular network technology focus on cellular broadcast capabilities and rely on the capabilities of standard handsets or specially designed handsets to alert the user. However, some mobile devices will not immediately display emergency broadcast messages and hence the messages are left in the user's inbox for later retrieval. Other solutions require specific emergency devices tuned to specific frequencies or require specific action by end users. There are also solutions which provide the capability to seize cellular channels and resource from non-emergency users for use by emergency services personnel, primarily by providing the emergency personnel with a higher priority level. These systems provide emergency personnel with the ability to communicate among themselves, but not the ability to broadcast emergency information to the general public.

Use of the Internet to deliver emergency warnings has drawbacks similar to those of radio and television broadcasting. Just as people may not be watching television or listening to the radio, they may not be using a computer connected to the Internet.

### BRIEF SUMMARY OF THE INVENTION

In one embodiment of the present invention, a Media Proxy interrupts all currently active media sessions of all users currently located in the geographic area of an active emergency and inserts relevant emergency data such as detailed broadcast video or audio alerts by replacing the media in the currently active session with the emergency data. These media sessions may include video and audio sessions being conducted over the Internet, landline telecommunication networks, or wireless telecommunication networks.

The invention is defined by claims 1,9 and 15.

There is no known solution today that preempts current active media sessions and substitutes emergency media feeds for end-user devices connected via both wireless and landline telephone networks. The present invention provides such a solution.

Advantageously, the present invention is not dependent on specific communications technologies, specific emergency devices, or specific device capabilities such as immediate emergency message display. The invention commandeers currently active data sessions, thus leading to a much higher probability of alerting the user of an emergency. Only the sessions of the users in the identified target region receive the new emergency media content. The invention is not limited to cellular networks and can be used to intercept any IP media feeds to devices such as mobile phones and laptops.

Additionally, it should be noted that the present invention does not interfere with, preempt, or otherwise impact other emergency methodologies such as radio and television message broadcasting or voice or data channel seizure.

### BRIEF DESCRIPTION OF THE DRAWINGS

In the following section, the invention will be described with reference to exemplary embodiments illustrated in the figures, in which:
FIG. 1 is a simplified block diagram of a first exemplary embodiment of an Emergency Notification Service (ENS) system of the present invention;
FIG. 2 is a simplified block diagram of a second exemplary embodiment of the ENS system of the present invention;
FIG. 3 is a flow chart illustrating the steps of an exemplary embodiment of the method of the present invention; and
FIG. 4 is a simplified block diagram of a Media Proxy in an exemplary embodiment of the present invention.

### DETAILED DESCRIPTION

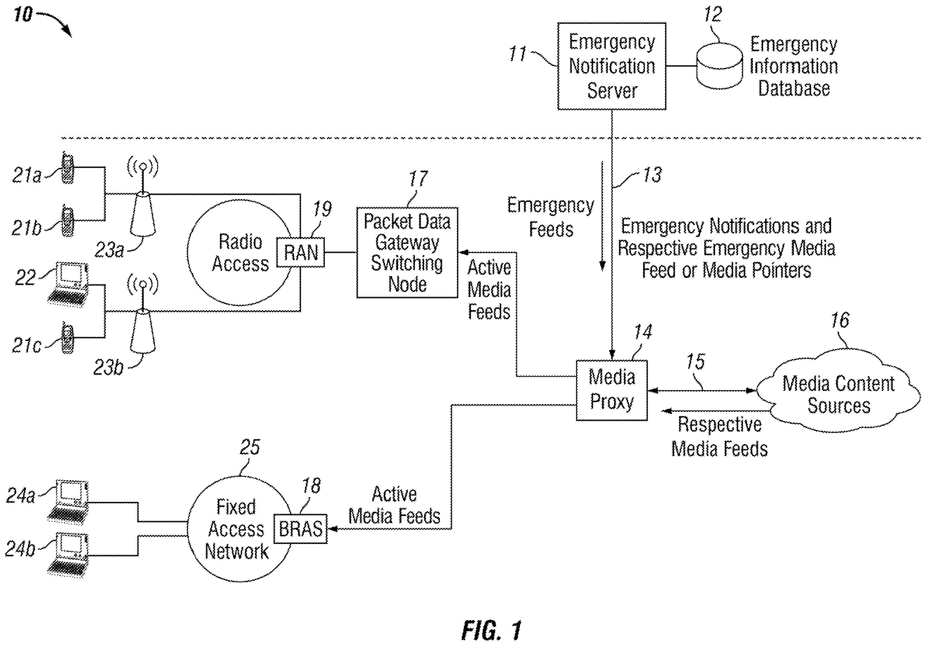

FIG. 1 is a simplified block diagram of a first exemplary embodiment of the Emergency Notification Service (ENS) system 10 of the present invention. In the event of an emergency, an ENS Server 11 obtains emergency information from a database 12 or other source, and includes the information in an ENS notification 13 sent to a Media Proxy 14. The emergency information may include, for example, an indication of the type of emergency, the geographic area affected by the emergency, and recommended actions to be taken by the recipient of the information. The ENS notification may also include a link to a live media feed, a media file for distribution, or metadata describing what kind of existing media should be disseminated. The Media Proxy is in the path of one or more media feeds 15 being transported from one or more media content sources 16 to various types of media gateways such as, for example, a Packet Data Gateway Switching Node (PDSN) 17 and a Broadband Remote Access Server (BRAS) 18. The PDSN 17, which may be, for example, a Gateway GPRS Service Node (GGSN) in a cellular core network connects to a Radio Access Network (RAN) 19, which provides end-user devices 21a-21c and 22 with access to the core network through radio base stations (RBSs)/Node Bs (or wireless access points) 23a-23b. The BRAS 18 may provide user terminals 24a-24b with fixed access through, for example, an Ethernet Local Area Network (LAN) or other fixed access network 25.

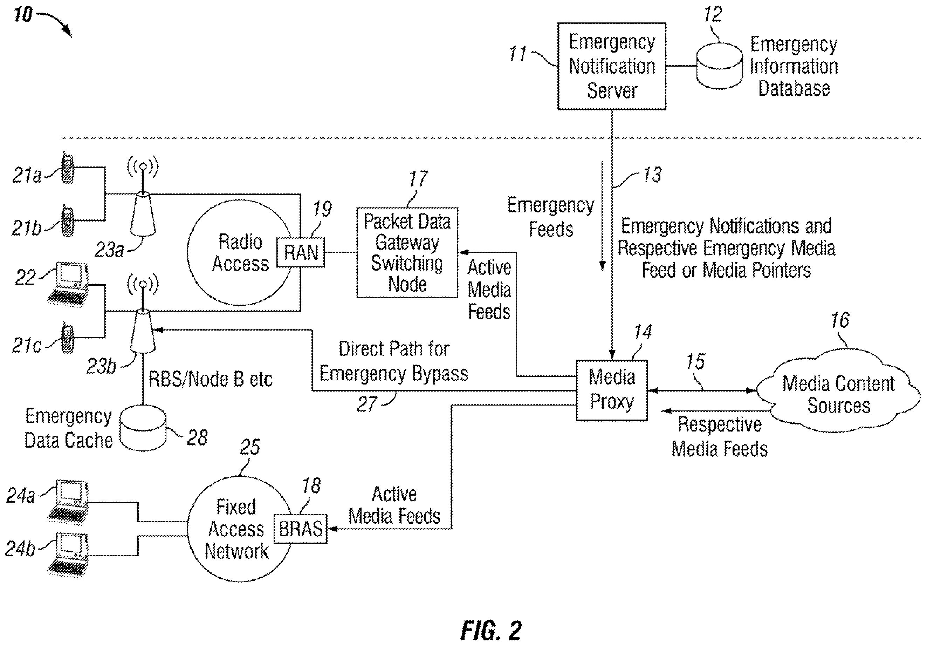

FIG. 2 is a simplified block diagram of a second exemplary embodiment of the ENS system of the present invention. In this embodiment, a logical direct connection 26 is provided between the Media Proxy 14 and one or more of the radio base stations 23a-23b. The same physical signaling path is utilized, but when the Media Proxy receives the ENS notification 13 from the ENS Server 11, the Media Proxy sends an emergency priority indicator in a message to the RBS/Node B. The RBS/Node B includes an emergency data cache 28 for storing ENS media, which the RBS/Node B selects based on the emergency indicator, and plays to the user terminals when the emergency indicator is received. Thus, a faster connection is provided since all that is needed from the Media Proxy is emergency signaling; no media transport is required. Additionally, the Media Proxy may also notify the RAN that the QoS for the session should be set to emergency and thus not be preempted by other QoS settings for RAN resource allocation. The RBS/Node B may implement the emergency QoS setting as defined, for example, in the Long Term Evolution (LTE) standards, In this way, the Media Proxy not only replaces existing sessions with emergency streams, but also takes steps to prevent preemption of the emergency media content.

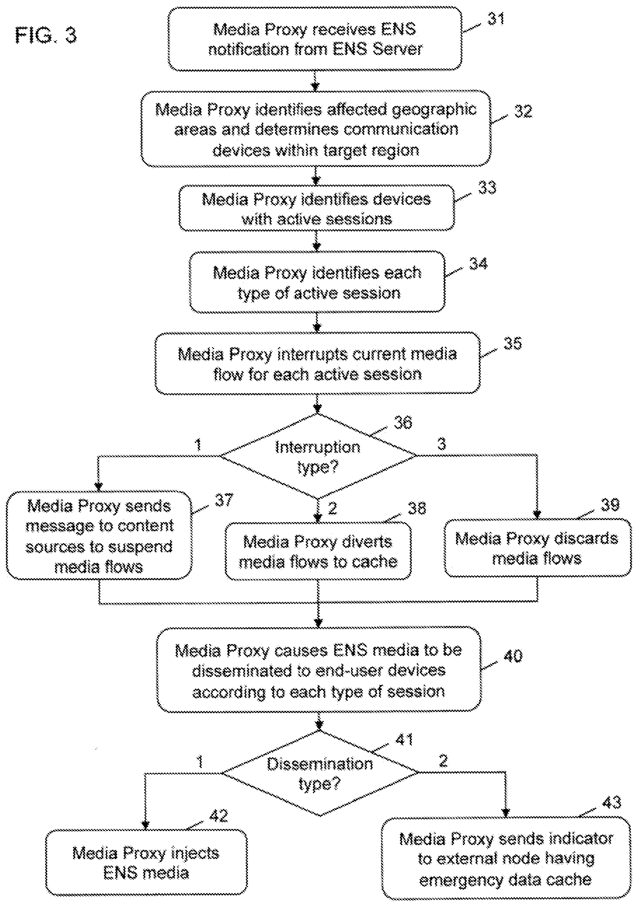

FIG. 3 is a flow chart illustrating the steps of an exemplary embodiment of the method of the present invention. At step 31, the Media Proxy 14 receives the ENS notification 13 from the ENS Server 11. At step 32, the Media Proxy identifies the affected geographic areas and determines the end-user devices known to be located within the target region. At step 33, the Media Proxy then identifies which of those end-user devices are currently engaged in active media sessions. At step 34, the Media Proxy then identifies each type of active media session. Once the active sessions and session types are identified, the method moves to step 35 where the Media Proxy interrupts the current media flow for each active session. The sessions may be interrupted in different ways, so at step 36, it is determined for example whether the Media Proxy will use interruption type 1, 2, or 3. If type 1 is used, the method moves to step 37 where the Media Proxy sends a message to the media content sources 16 to suspend the active media flows during the emergency notification. If type 2 is used, the method moves to step 38. The sessions between the media content sources 16 and the Media Proxy are maintained, but the Media Proxy diverts the active media flows during the emergency notification into a session buffer/cache for storage and retrieval after the emergency notification is completed. In this scenario, the session can continue after the emergency notification at the point the session was interrupted. If type 3 is used, the method moves to step 39. Again, the sessions between the media content sources and the Media Proxy are maintained, but the Media Proxy discards the media flows during the emergency notification. In this scenario, the media content during the emergency notification is lost, and the session continues at the point the emergency notification is completed.

At step 40, the Media Proxy causes the ENS media to be disseminated to the end-user devices. The dissemination may be performed in different ways, so at step 41, it is determined for example whether the Media Proxy will use dissemination type or 2. If type 1 is used, the method moves to step 42 where the Media Proxy injects ENS media according to the type of session in place of the regular media flow, as shown in FIG. 1. If type 2 is used, the method moves to step 43 where the Media Proxy sends an emergency priority indicator to an external node such as the RBS/Node B, as shown in FIG. 2. The RBS/Node B then retrieves ENS media stored in the RBS/Node B emergency data cache 28 and substitutes the ENS media for the regular media flow.

In an alternative embodiment, the ENS notification 13 may point the Media Proxy 14 to an emergency content source where the ENS media can be found rather than carrying the ENS media in the notification. For example, the notification may include a link to a live media feed originating at the ENS Server 11 or other source. Likewise, as described in more detail below, the Media Proxy may include a database of prerecorded ENS media (ENS Notification Cache 53), and the ENS notification may simply provide a type identifier indicating which ENS media to retrieve and disseminate to the end-user devices. Regardless of the source, the Media Proxy preempts the active media streams with a new stream from the Media Proxy as specified in the emergency notification directive.

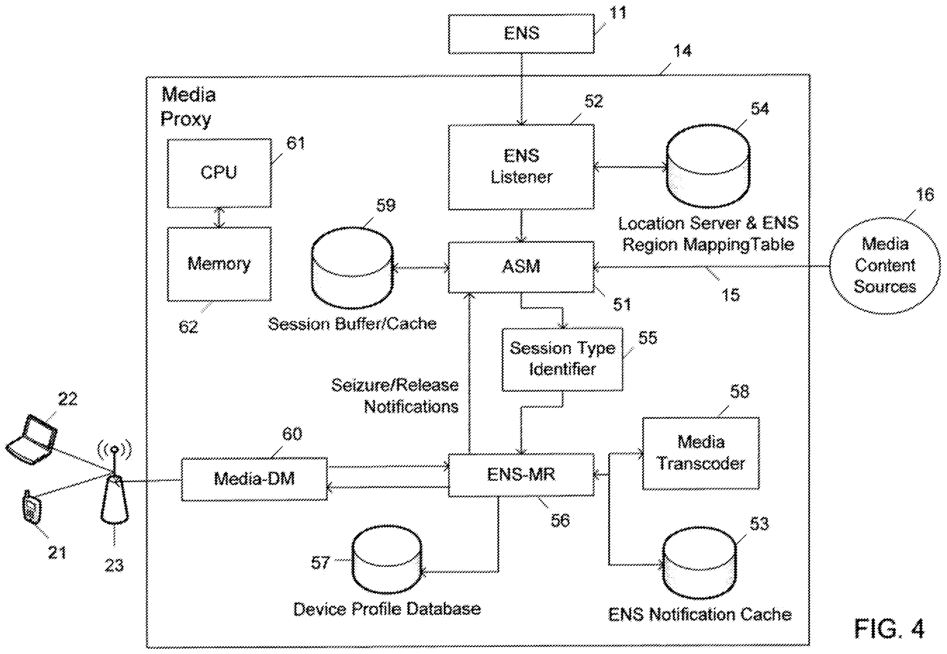

FIG. 4 is a simplified block diagram of the Media Proxy 14 in an exemplary embodiment of the present invention. In the embodiment shown, an operator is providing media sessions between external content sources 16 and end users 21-22 via the Media Proxy, which may be transparent or addressable. The Media Proxy includes an Active Session Manager (ASM) 51 for receiving the media feeds 15, and an ENS Listener 52 for receiving the ENS notification 13 from the ENS Server 11. The ENS Notification contains an ENS location identifier for the target location(s) of the emergency, and either the Emergency Notification Media or an Emergency Notification type identifier for cases where the notification has been preloaded in the Media Proxy's ENS Notification Cache (ENS-NC) 53. The ENS Listener may identify the target location(s) by accessing a location server and ENS region mapping table 54 and mapping the ENS location identifiers to location ID's used within the service providers network.

The ENS listener then sends the ENS notification and target location ID's to the ASM 51. The ASM sends a device User Agent and all application active session IDs to a Session Type Identifier 55 to determine which sessions are media sessions to which ENS notifications apply. This can be determined through a combination of subscriber Class of Service (CoS) settings and/or session protocol types. The Session Type Identifier sends the ENS media or ENS media identifier to an ENS Media Router (ENS-MR) 56. The ENS-MR determines whether the ENS media is contained within the ENS Notification sent from the Session Type Identifier or whether the ENS media needs to be retrieved from the local ENS Notification Cache (ENS-NC) 53 using the Emergency Notification type identifier sent in the original ENS notification 13 from the external ENS Server 11. If the ENS media needs to be retrieved, the ENS-MR requests the ENS media from the ENS-NC using the Emergency Notification type identifier. The ENS-NC receives the media request from the ENS-MR, identifies the correct ENS media file using the supplied Emergency Notification type identifier, and returns the ENS media file to the ENS-MR.

The ENS-MR 56 identifies the capabilities of all end-user devices in all currently actives sessions previously determined by the ASM 51. The ENS-MR uses the device User Agent supplied by the ASM and checks the capabilities against a Device Profile Database 57, Based on the target device capabilities and the ENS file format to be delivered, the ENS-MR determines whether the ENS media needs to be transcoded to ensure the target devices are capable of rendering the ENS media upon delivery. If transcoding is required, the ENS-MR invokes a Media Transcoder 58 with a target file format request. The Media Transcoder then transcodes the ENS media to the target format and returns the ENS media to the ENS-MR.

The ENS-MR 56 notifies the ASM 51 that the ENS-MR is going to seize existing sessions for the purpose of emergency notification delivery. The ENS-MR sends all relevant active session ID's to the ASM. The ASM may (1) send a message to the media content sources to suspend the current active sessions with the content sources during the emergency notification; (2) continue the current active session and discard the regular media content during the emergency notification; or (3) continue the current active session and buffer/cache the regular content in a Session Buffer/Cache-59. The action of the ASM is determined based on session type, source media caching directives, and Media Proxy caching capabilities.

The ENS-MR 56 sends the ENS Media with the destination addresses for the end-user devices to a Media Delivery Mechanism (Media-DM) 60. The Media-DM delivers the emergency media to all target devices via the appropriate network channels. As each emergency notification session ends, the Media-DM notifies the ENS-MR 56 that each respective emergency session is complete. The ENS-MR notifies the ASM 51 that the respective emergency sessions are now complete. The ASM either resumes the previous media session (if the session was buffered) or the ASM terminates all user and media source connections and marks the user session state to IDLE.

The operation of the Media Proxy 14 may be controlled by a central processing unit (CPU) 61 executing computer program instructions stored on a memory 62. Alternatively, the Media Proxy may be implemented in hardware, firmware, or a combination of software, hardware, and firmware.

Traffic such as over-the-top (OTT) TV from online video services like Hulu.com may also flow through the Media Proxy. Such traffic is protected by a Digital Rights Management (DRM) license, but the Media Proxy still knows what the traffic is and can still interrupt the session and disseminate the ENS media to the OTT TV viewers. Alternatively, a dedicated Media Proxy may be integrated with the website of an online video service utilizing, for example, an ENS Application Programming Interface (API) or similar integration technique to enable the network to preempt these premium protected media feeds during an emergency.

As described above in various embodiments, the present invention provides a Media Proxy, system, and method for preempting current active media sessions and substituting emergency media feeds for end-user devices connected via both wireless and landline telephone networks. The invention is not dependent on specific communications technologies, specific emergency devices, or specific device capabilities.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A media proxy (14) for disseminating emergency media content during an emergency to end-user devices (21a to 24b) currently engaged in active media sessions between the media proxy (14) and media content sources in the service provider's network, wherein the media proxy (14) is adapted to receive from the media content sources (16) an active media feed for each active media session and to provide the active media feed to the end-user device corresponding to the active media session, the media proxy (14) comprising:
means adapted to receive an emergency notification from an emergency notification server (11);
means adapted to respond to the emergency notification and to interrupt the active media feeds; and
means adapted to cause the emergency media content to be disseminated to the end-user devices (21a to 24b) by replacing the active media feeds with the emergency media content.

2. The media proxy (14) according to claim 1, further comprising an emergency media notification cache adapted to store the emergency media content prior to the emergency, wherein the emergency notification includes an emergency notification type identifier for identifying specific emergency media content in the emergency media notification cache for disseminating to the end-user devices (21a to 24b).

3. The media proxy according to claim 1, wherein the emergency notification includes the emergency media content and a location identifier for a target region of the emergency, wherein the media proxy (14) further comprises:
a location mapping table (54) for mapping the location identifier received in the emergency notification to a second location identifier utilized in the service provider's network; and
means adapted to identify end-user devices engaged in active media sessions in the target region of the emergency, wherein the media proxy (14) is adapted to interrupt the active media feeds and to cause emergency media content to be disseminated only to the end-user devices (21a to 24b) in the target region.

4. The media proxy according to claim 1, further comprising:
a session type identifier for identifying the type of active media session in which each end-user device (21a to 24b) is currently engaged; and
a media transcoder adapted to transcode the emergency media content for each end-user device (21a to 24b) according to the session type for each end-user device (21a to 24b).

5. The media proxy according to claim 1, wherein the means adapted to interrupt the active media feeds includes means adapted to send a message to the media content sources (16) to suspend the media feeds during the emergency notification.

6. The media proxy according to claim 1, wherein the means adapted to interrupt the active media feeds includes means adapted to divert the active media feeds into a session buffer/cache for storage and retrieval after the emergency notification.

7. The media proxy according to claim 1, wherein the means adapted to interrupt the active media feeds includes means adapted to discard the active media feeds during the emergency notification.

8. The media proxy according to claim 1, wherein the emergency media content is stored in an emergency data cache (28) in an access network node, and the emergency notification received by the media proxy includes an emergency notification type identifier for identifying specific media content in the access network node's emergency data cache for providing to the end-user devices (21a to 24b);
wherein the means adapted to cause emergency media content to be disseminated to the end-user devices (21a to 24b) includes means adapted to send the emergency notification type identifier to the access network node.

9. A method of disseminating emergency media content during an emergency to end-user devices (21a to 24b) currently engaged in active media sessions between a media proxy (14) and media content sources (16) in a service provider's network, wherein the media proxy (14) receives from the media content sources (16) an active media feed for each active media session and provides the active media feed to the end-user device (21a to 24b) corresponding to the active media session, the method comprising the steps of:
receiving, in the media proxy (14), an emergency notification from an emergency notification server; and in response to the emergency notification:
interrupting the active media feeds by the media proxy (14); and the media proxy causing the emergency media content to be disseminated to the end-user devices (21a to 24b) by replacing the active media feeds with the emergency media content.

10. The method according to claim 9, further comprising storing the emergency media content prior to the emergency in an emergency media notification cache in the media proxy (14);
wherein the emergency notification includes an emergency notification type identifier and the step of causing emergency media content to be disseminated to the end-user devices (21a to 24b) includes:
utilizing the emergency notification type identifier by the media proxy (14) to identify specific media content in the emergency media notification cache; and
sending the identified specific media content from the media proxy (14) to the end-user devices (21a to 24b).

11. The method according to claim 9, wherein the emergency notification includes the emergency media content and a location identifier for a target region of the emergency, and the method further comprises identifying end-user devices (21a to 24b) engaged in active media sessions in the target region of the emergency;
wherein the step of interrupting the active media feeds by the media proxy (14) includes interrupting the active media feeds of only the end-user devices (21a to 24b) in the target region; and
wherein the step of causing emergency media content to be disseminated to the end-user devices (21a to 24b) includes sending the emergency media content from the media proxy (14) only to end-user devices (21a to 24b) operating in the target region.

12. The method according to claim 9, wherein the step of interrupting the active media feeds includes sending a message from the media proxy (14) to the media content sources (16) to suspend the media feeds during the emergency notification;
the media proxy (14) diverting the active media feeds into a session buffer/cache for storage and retrieval after the emergency notification; or
the media proxy (14) discarding the active media feeds during the emergency notification.

13. The method according to claim 9, wherein the emergency media content is stored in an emergency data cache (28) in an access network node, and the emergency notification received by the media proxy (14) includes an emergency notification type identifier for identifying specific media content in the access network node's emergency data cache (28) for providing to the end-user devices (21a to 24b);
wherein the step of causing emergency media content to be disseminated to the end-user devices (21a to 24b) includes sending the emergency notification type identifier from the media proxy (14) to the access network node.

14. The method according to claim 13, wherein the step of causing emergency media content to be disseminated to the end-user devices (21a to 24b) also includes notifying the access network node that the Quality of Service (QoS) for the session should be set to an emergency level to preclude preemption by other QoS settings for access network resource allocation.

15. An Emergency Notification Service, ENS, system comprising: an ENS Server (11) adapted to output an emergency notification; and a media proxy (14) according to claim 1.

## Patentansprüche

1. Media-Proxy (14) zum Verbreiten von Notfall-Media-Inhalt während eines Notfalls an Endbenutzergeräte (21a bis 24b), die derzeit an aktiven Mediasitzungen zwischen dem Media-Proxy (14) und Media-Inhaltsquellen im Netz des Dienstanbieters beteiligt sind,
wobei der Media-Proxy (14) dazu ausgelegt ist, von den Media-Inhaltsquellen (16) einen aktiven Media-Feed für jede aktive Mediasitzung zu empfangen und den aktiven Media-Feed an das Endbenutzergerät bereitzustellen, das der aktiven Mediasitzung entspricht, wobei der Media-Proxy (14) Folgendes umfasst:
ein Mittel, das zum Empfangen einer Notfallbenachrichtigung von einem Notfallbenachrichtigungsserver (11) ausgelegt ist;
ein Mittel, das zum Antworten auf die Notfallbenachrichtigung und Unterbrechen der aktiven Media-Feeds ausgelegt ist; und
ein Mittel, das dazu ausgelegt ist, zu veranlassen, dass der Notfall-Media-Inhalt an die Endbenutzergeräte (21a bis 24b) verteilt wird, indem die aktiven Media-Feeds durch den Notfall-Media-Inhalt ersetzt werden.

2. Media-Proxy (14) nach Anspruch 1, ferner umfassend einen Notfall-Media-Benachrichtigungscache, der dazu ausgelegt ist, den Notfall-Media-Inhalt vor dem Notfall zu speichern, wobei die Notfallbenachrichtigung eine Notfallbenachrichtigungstypenkennung zum Identifizieren von spezifischem Notfall-Media-Inhalt in dem Notfall-Media-Benachrichtigungscache zur Verteilung an die Endbenutzergeräte (21a bis 24b) beinhaltet.

3. Media-Proxy nach Anspruch 1, wobei die Notfallbenachrichtigung den Notfall-Media-Inhalt und eine Standortkennung für eine Zielregion des Notfalls beinhaltet, wobei der Media-Proxy (14) ferner Folgendes umfasst:
eine Standortzuordnungstabelle (54) zum Zuordnen der Standortkennung, die in der Notfallbenachrichtigung empfangen wird, zu einer zweiten Standortkennung, die im Netz des Dienstanbieters verwendet wird; und
ein Mittel, das dazu ausgelegt ist, Endbenutzergeräte, die an aktiven Mediasitzungen in der Zielregion des Notfalls beteiligt sind, zu identifizieren, wobei der Media-Proxy (14) dazu ausgelegt ist, die aktiven Media-Feeds zu unterbrechen und zu veranlassen, dass der Notfall-Media-Inhalt nur an die Endbenutzergeräte (21a bis 24b) in der Zielregion verbreitet wird.

4. Media-Proxy nach Anspruch 1, ferner umfassend:
eine Sitzungstypenkennung zum Identifizieren des Typs der aktiven Mediasitzung, an der jedes Endbenutzergerät (21a bis 24b) derzeit beteiligt ist; und
einen Media-Transcoder, der dazu ausgelegt ist, den Notfall-Media-Inhalt für jedes Endbenutzergerät (21a bis 24b) gemäß dem Sitzungstyp für jedes Endbenutzergerät (21a bis 24b) zu transcodieren.

5. Media-Proxy nach Anspruch 1, wobei das Mittel, das zum Unterbrechen der aktiven Media-Feeds ausgelegt ist, ein Mittel beinhaltet, das dazu ausgelegt ist, eine Nachricht an die Media-Inhaltsquellen (16) zu senden, um die Media-Feeds während der Notfallbenachrichtigung vorübergehend zu unterbrechen.

6. Media-Proxy nach Anspruch 1, wobei das Mittel, das zum Unterbrechen der aktiven Media-Feeds ausgelegt ist, ein Mittel beinhaltet, das dazu ausgelegt ist, die aktiven Media-Feeds zum Speichern und Abrufen nach der Notfallbenachrichtigung in einen Sitzungspuffer/-Cache umzuleiten.

7. Media-Proxy nach Anspruch 1, wobei das Mittel, das zum Unterbrechen der aktiven Media-Feeds ausgelegt ist, ein Mittel beinhaltet, das dazu ausgelegt ist, die aktiven Media-Feeds während der Notfallbenachrichtigung zu verwerfen.

8. Media-Proxy nach Anspruch 1, wobei der Notfall-Media-Inhalt in einem Notfalldatencache (28) in einem Zugangsnetzknoten gespeichert ist, und die Notfallbenachrichtigung, die von dem Media-Proxy empfangen wird, eine Notfallbenachrichtigungstypenkennung zum Identifizieren eines spezifischen Media-Inhalts im Notfalldatencache des Zugangsnetzknotens zur Bereitstellung an die Endbenutzergeräte (21a bis 24b) beinhaltet;
wobei das Mittel, das dazu ausgelegt ist, zu veranlassen, dass der Notfall-Media-Inhalt an die Endbenutzergeräte (21a bis 24b) verbreitet wird, ein Mittel beinhaltet, das dazu ausgelegt ist, die Notfallbenachrichtigungstypenkennung an den Zugangsnetzknoten zu senden.

9. Verfahren zum Verbreiten von Notfall-Media-Inhalt während eines Notfalls an Endbenutzergeräte (21a bis 24b), die derzeit an aktiven Mediasitzungen zwischen einem Media-Proxy (14) und Media-Inhaltsquellen (16) in einem Netz eines Dienstanbieters beteiligt sind, wobei der Media-Proxy (14) von den Media-Inhaltsquellen (16) einen aktiven Media-Feed für jede aktive Mediasitzung empfängt und den aktiven Media-Feed an das Endbenutzergerät (21a bis 24b) bereitstellt, das der aktiven Mediasitzung entspricht, wobei das Verfahren folgende Schritte umfasst:
Empfangen einer Notfallbenachrichtigung von einem Notfallbenachrichtigungsserver in dem Media-Proxy (14); und
in Antwort auf die Notfallbenachrichtigung:
Unterbrechen der aktiven Media-Feeds durch den Media-Proxy (14); und
wobei der Media-Proxy veranlasst, dass der Notfall-Media-Inhalt an die Endbenutzergeräte (21a bis 24b) verteilt wird, indem die aktiven Media-Feeds durch den Notfall-Media-Inhalt ersetzt werden.

10. Verfahren nach Anspruch 9, ferner umfassend Speichern des Notfall-Media-Inhalts vor dem Notfall in einem Notfall-Media-Benachrichtigungscache im Media-Proxy (14);
wobei die Notfallbenachrichtigung eine Notfallbenachrichtigungstypenkennung beinhaltet und der Schritt des Veranlassens, dass der Notfall-Media-Inhalt an die Endbenutzergeräte (21a bis 24b) verbreitet wird, Folgendes beinhaltet:
Benutzen der Notfallbenachrichtigungstypenkennung durch den Media-Proxy (14), um spezifischen Media-Inhalt in dem Notfall-Media-Benachrichtigungscache zu identifizieren; und
Senden des identifizierten spezifischen Media-Inhalts von dem Media-Proxy (14) an die Endbenutzergeräte (21a bis 24b).

11. Verfahren nach Anspruch 9, wobei die Notfallbenachrichtigung den Notfall-Media-Inhalt und eine Standortkennung für eine Zielregion des Notfalls beinhaltet und das Verfahren ferner Identifizieren von Endbenutzergeräten (21a bis 24b) umfasst, die an aktiven Mediasitzungen in der Zielregion des Notfalls beteiligt sind;
wobei der Schritt des Unterbrechens der aktiven Media-Feeds durch den Media-Proxy (14) Unterbrechen der aktiven Media-Feeds von nur den Endbenutzergeräten (21a bis 24b) in der Zielregion beinhaltet; und
wobei der Schritt des Veranlassens, dass der Notfall-Media-Inhalt an die Endbenutzergeräte (21a bis 24b) verbreitet wird, Senden des Notfall-Media-Inhalts von dem Media-Proxy (14) nur an die Endbenutzergeräte (21a bis 24b) beinhaltet, die in der Zielregion betrieben werden.

12. Verfahren nach Anspruch 9, wobei der Schritt des Unterbrechens der aktiven Media-Feeds Senden einer Nachricht von dem Media-Proxy (14) an die Media-Inhaltsquellen (16) beinhaltet, um die Media-Feeds während der Notfallbenachrichtigung vorübergehend zu unterbrechen;
wobei der Media-Proxy (14) die aktiven Media-Feeds in einen Sitzungspuffer/-Cache zum Speichern und Abrufen nach der Notfallbenachrichtigung umleitet; oder
der Media-Proxy (14) die aktiven Media-Feeds während der Notfallbenachrichtigung verwirft.

13. Verfahren nach Anspruch 9, wobei der Notfall-Media-Inhalt in einem Notfalldatencache (28) in einem Zugangsnetzknoten gespeichert ist, und die Notfallbenachrichtigung, die von dem Media-Proxy (14) empfangen wird, eine Notfallbenachrichtigungstypenkennung zum Identifizieren eines spezifischen Media-Inhalts im Notfalldatencache (28) des Zugangsnetzknotens zur Bereitstellung an die Endbenutzergeräte (21a bis 24b) beinhaltet;
wobei der Schritt des Veranlassens, dass der Notfall-Media-Inhalt an die Endbenutzergeräte (21a bis 24b) verbreitet wird, Senden der Notfallbenachrichtigungstypenkennung von dem Media-Proxy (14) an den Zugangsnetzknoten beinhaltet.

14. Verfahren nach Anspruch 13, wobei der Schritt des Veranlassens, dass der Notfall-Media-Inhalt an die Endbenutzergeräte (21a bis 24b) verbreitet wird, auch Benachrichtigen des Zugangsnetzknotens beinhaltet, dass die Dienstgütequalität (QoS) für die Sitzung auf eine Notfallstufe eingestellt wird, um eine Bevorrechtigung von anderen QoS-Einstellungen zur Zuweisung von Zugangsnetzressourcen auszuschließen.

15. Notbenachrichtigungsdienst(ENS)-System, umfassend:
einen ENS-Server (11), der zum Ausgeben einer Notfallbenachrichtigung ausgelegt ist; und
einen Media-Proxy (14) nach Anspruch 1.

## Revendications

1. Serveur mandataire multimédia (14) destiné à diffuser un contenu multimédia d'urgence pendant une urgence à des dispositifs d'utilisateurs finaux (21a à 24b) qui sont actuellement engagés dans des sessions multimédias actives entre le serveur mandataire multimédia (14) et les sources de contenu multimédia dans le réseau d'un fournisseur de services,
le serveur mandataire multimédia (14) étant conçu pour recevoir, en provenance des sources de contenu multimédia (16), un flux multimédia actif pour chaque session multimédia active et pour fournir le flux multimédia actif au dispositif d'utilisateur final correspondant à la session multimédia active,
le serveur mandataire multimédia (14) comprenant :
des moyens conçus pour recevoir une notification d'urgence en provenance d'un serveur de notification d'urgence (11) ;
des moyens conçus pour répondre à la notification d'urgence et pour interrompre les flux multimédias actifs ; et
des moyens conçus pour amener le contenu multimédia d'urgence à être diffusé aux dispositifs d'utilisateurs finaux (21a à 24b) en remplaçant les flux multimédias actifs par le contenu multimédia d'urgence.

2. Serveur mandataire multimédia (14) selon la revendication 1, comprenant en outre une mémoire cache de notification multimédia d'urgence conçue pour stocker le contenu multimédia d'urgence avant l'urgence, dans lequel la notification d'urgence comprend un identifiant de type de notification d'urgence permettant d'identifier le contenu multimédia d'urgence spécifique dans la mémoire cache de notification multimédia d'urgence à diffuser aux dispositifs d'utilisateurs finaux (21a à 24b).

3. Serveur mandataire multimédia selon la revendication 1, dans lequel la notification d'urgence comprend le contenu multimédia d'urgence et un identifiant d'emplacement pour une région cible de l'urgence, le serveur mandataire multimédia (14) comprenant en outre :
une table de mise en correspondance d'emplacements (54) permettant de mettre en correspondance l'identifiant d'emplacement reçu dans la notification d'urgence avec un second identifiant d'emplacement utilisé dans le réseau du fournisseur de services ; et
des moyens conçus pour identifier des dispositifs d'utilisateurs finaux engagés dans des sessions multimédias actives dans la région cible de l'urgence, le serveur mandataire multimédia (14) étant conçu pour interrompre les flux multimédias actifs et pour amener le contenu multimédia d'urgence à n'être diffusé qu'aux dispositifs d'utilisateurs finaux (21a à 24b) situés dans la région cible.

4. Serveur mandataire multimédia selon la revendication 1, comprenant en outre :
un identifiant de type de session permettant d'identifier le type d'une session multimédia active dans laquelle est actuellement engagé chaque dispositif d'utilisateur final (21a à 24b) ; et
un transcodeur multimédia conçu pour transcoder le contenu multimédia d'urgence pour chaque dispositif d'utilisateur final (21a à 24b) en fonction du type de session pour chaque dispositif d'utilisateur final (21a à 24b).

5. Serveur mandataire multimédia selon la revendication 1, dans lequel les moyens conçus pour interrompre les flux multimédias actifs comprennent un moyen conçu pour envoyer un message aux sources de contenu multimédia (16) pour suspendre les flux multimédias pendant la notification d'urgence.

6. Serveur mandataire multimédia selon la revendication 1, dans lequel les moyens conçus pour interrompre les flux multimédias actifs comprennent un moyen conçu pour détourner les flux multimédias actifs dans une mémoire tampon/cache de session pour qu'ils soient stockés et récupérés après la notification d'urgence.

7. Serveur mandataire multimédia selon la revendication 1, dans lequel les moyens conçus pour interrompre les flux multimédias actifs comprennent un moyen conçu pour supprimer les flux multimédias actifs pendant la notification d'urgence.

8. Serveur mandataire multimédia selon la revendication 1, dans lequel le contenu multimédia d'urgence est stocké dans une mémoire cache de données d'urgence (28) dans un noeud de réseau d'accès, et la notification d'urgence reçue par le serveur mandataire multimédia comprend un identifiant de type de notification d'urgence permettant d'identifier un contenu multimédia spécifique dans la mémoire cache de données d'urgence du noeud de réseau d'accès à fournir aux dispositifs d'utilisateurs finaux (21a à 24b) ;
dans lequel les moyens conçus pour amener le contenu multimédia d'urgence à être diffusé aux dispositifs d'utilisateurs finaux (21a à 24b) comprennent un moyen conçu pour envoyer l'identifiant de type de notification d'urgence au noeud de réseau d'accès.

9. Procédé de diffusion de contenu multimédia d'urgence pendant une urgence à des dispositifs d'utilisateurs finaux (21a à 24b) qui sont actuellement engagés dans des sessions multimédias actives entre un serveur mandataire multimédia (14) et des sources de contenu multimédia (16) dans le réseau d'un fournisseur de services, dans lequel le serveur mandataire multimédia (14) reçoit, en provenance des sources de contenu multimédia (16), un flux multimédia actif pour chaque session multimédia active et fournit le flux multimédia actif au dispositif d'utilisateur final (21a à 24b) correspondant à la session multimédia active, le procédé comprenant les étapes :
de réception, dans le serveur mandataire multimédia (14), d'une notification d'urgence en provenance d'un serveur de notification d'urgence ; et en réponse à la notification d'urgence :
d'interruption des flux multimédias actifs par le serveur mandataire multimédia (14) ; et
le serveur mandataire multimédia amenant le contenu multimédia d'urgence à être diffusé aux dispositifs d'utilisateurs finaux (21a à 24b) en remplaçant les flux multimédias actifs par le contenu multimédia d'urgence.

10. Procédé selon la revendication 9, comprenant en outre le stockage du contenu multimédia d'urgence avant l'urgence dans une mémoire cache de notification multimédia d'urgence dans le serveur mandataire multimédia (14) ;
dans lequel la notification d'urgence comprend un identifiant de type de notification d'urgence et l'étape consistant à amener le contenu multimédia d'urgence à être diffusé aux dispositifs d'utilisateurs finaux (21a à 24b) comprend :
l'utilisation de l'identifiant de type de notification d'urgence par le serveur mandataire multimédia (14) pour identifier le contenu multimédia spécifique dans la mémoire cache de notification multimédia d'urgence ; et
l'envoi du contenu multimédia spécifique identifié, du serveur mandataire multimédia (14) aux dispositifs d'utilisateurs finaux (21a à 24b).

11. Procédé selon la revendication 9, dans lequel la notification d'urgence comprend le contenu multimédia d'urgence et un identifiant d'emplacement pour une région cible de l'urgence, et le procédé comprenant en outre l'identification de dispositifs d'utilisateurs finaux (21a à 24b) engagés dans des sessions multimédias actives dans la région cible de l'urgence ;
dans lequel l'étape d'interruption des flux multimédias actifs par le serveur mandataire multimédia (14) comprend l'interruption des flux multimédias actifs uniquement pour les dispositifs d'utilisateurs finaux (21a à 24b) situés dans la région cible ; et
dans lequel l'étape consistant à amener le contenu multimédia d'urgence à être diffusé aux dispositifs d'utilisateurs finaux (21a à 24b) comprend l'envoi du contenu multimédia d'urgence, en provenance du serveur mandataire multimédia (14), uniquement aux dispositifs d'utilisateurs finaux (21a à 24b) fonctionnant dans la région cible.

12. Procédé selon la revendication 9, dans lequel l'étape d'interruption des flux multimédias actifs comprend l'envoi d'un message, du serveur mandataire multimédia (14) aux sources de contenu multimédia (16), pour suspendre les flux multimédias pendant la notification d'urgence ;
le serveur mandataire multimédia (14) détournant les flux multimédias actifs dans une mémoire tampon/cache de session pour être stockés et récupérés après la notification d'urgence ; ou
le serveur mandataire multimédia (14) supprimant les flux multimédias actifs pendant la notification d'urgence.

13. Procédé selon la revendication 9, dans lequel le contenu multimédia d'urgence est stocké dans une mémoire cache de données d'urgence (28) dans un noeud de réseau d'accès, et la notification d'urgence reçue par le serveur mandataire multimédia (14) comprend un identifiant de type de notification d'urgence permettant d'identifier un contenu multimédia spécifique dans la mémoire cache (28) de données d'urgence du noeud de réseau d'accès à fournir aux dispositifs d'utilisateurs finaux (21a à 24b) ;
dans lequel l'étape consistant à amener le contenu multimédia d'urgence à être diffusé aux dispositifs d'utilisateurs finaux (21a à 24b) comprend l'envoi de l'identifiant de type de notification d'urgence, du serveur mandataire multimédia (14) au noeud de réseau d'accès.

14. Procédé selon la revendication 13, dans lequel l'étape consistant à amener le contenu multimédia d'urgence à être diffusé aux dispositifs d'utilisateurs finaux (21a à 24b) comprend également la notification au noeud de réseau d'accès que la qualité du service (QS) pour la session devrait être paramétrée à un niveau d'urgence pour empêcher une préemption par d'autres paramètres de QS pour l'attribution des ressources du réseau d'accès.

15. Système de service de notification d'urgence, ENS, comprenant :
un serveur d'ENS (11) conçu pour délivrer une notification d'urgence ; et
un serveur mandataire multimédia (14) selon la revendication 1.
